# EUROPEAN PATENT APPLICATION

(11) **EP 3 686 246 A1**
(43) Date of publication of application: **29.07.2020**
(21) Application number: 18858251.4
(22) Date of filing: 29.08.2018
(51) Int. Cl.: C08L 71/02, C08K 3/011, C08K 3/013, C08K 3/04, C08K 3/34

(54) **EPICHLOROHYDRIN RUBBER COMPOSITION, CROSSLINKED EPICHLOROHYDRIN RUBBER OBJECT, AND DIAPHRAGM AND BLADDER FOR ACCUMULATOR**

(30) Priority: 21.09.2017 JP 2017181807
(71) Applicant: NOK Corporation, Minato-ku Tokyo 105-8585 (JP)
(72) Inventor: ABE, Shunsuke, Fujisawa-shi Kanagawa 251-0042 (JP)
(74) Representative: Global IP Europe Patentanwaltskanzlei
(86) International application number: PCT/JP2018/031973
(87) International publication number: WO 2019/058908

(57) **Abstract**

[Object] To provide an epichlorohydrin rubber composition giving an excellent balance between gas-barrier properties and cold resistance and having satisfactory roll processability, a crosslinked epichlorohydrin rubber, and materials for accumulators.

[Solution means] An epichlorohydrin rubber composition comprises 100 parts by weight of an epichlorohydrin-ethylene oxide-allyl glycidyl ether terpolymer rubber, 0 to 60 parts by weight of carbon black, and 30 to 60 parts by weight of a flat filler. A crosslinked epichlorohydrin rubber is prepared by crosslinking the composition with a crosslinking agent. Materials for accumulators comprise the crosslinked rubber.

## Description

### FIELD

The present invention relates to an epichlorohydrin rubber composition, a crosslinked epichlorohydrin rubber, a diaphragm for an accumulator, and a bladder for an accumulator. More specifically, the present invention relates to an epichlorohydrin rubber composition giving an excellent balance between gas-barrier properties and cold resistance and having satisfactory roll processability, a crosslinked epichlorohydrin rubber, a diaphragm for an accumulator, and a bladder for an accumulator.

### BACKGROUND

Bladders and diaphragms for accumulators comprise a rubber material having excellent gas-barrier properties. Depending on applications, the rubber material is required to have an excellent balance of properties including cold resistance, heat resistance, and oil resistance in addition to the gas-barrier properties.

Rubber polymers may have some excellent properties of the gas-barrier properties, the cold resistance, the heat resistance, and the oil resistance, but it is extremely difficult to produce a material having an excellent balance of all the properties due to characteristics of various polymers.

Acrylonitrile rubber has excellent processability, heat resistance, and oil resistance. Especially, a high acrylonitrile rubber containing acrylonitrile at a high content has excellent gas-barrier properties and thus is widely used as a material for accumulators. Such a material, however, has poor cold resistance and may cause a problem of gas leakage in a cold climate area (Japanese Patent Application Publication No. H08-217919, hereinafter called "Patent Document 1").

A low acrylonitrile rubber containing acrylonitrile at a low content is specifically intended to improve cold resistance but has poor gas-barrier properties. To improve the gas-barrier properties, the following technique has been disclosed: a flat filler is added to a rubber to sterically hinder gas permeation pathways in the rubber, thereby improving the gas-barrier properties (Japanese Patent Application Publication No. H08-208913, hereinafter called "Patent Document 2", and Japanese Patent Application Publication No. 2002-003649, hereinafter called "Patent Document 3"). According to the technique, a rubber containing a larger amount of the flat filler is likely to have higher gas-barrier properties. However, a rubber containing a large amount of the filler may have a high impact brittleness temperature at low temperature.

In other words, an acrylonitrile rubber containing acrylonitrile at an appropriate content and containing a flat filler in an appropriate amount is still difficult to satisfy both the gas-barrier properties and the cold resistance, which are incompatible properties.

### BRIEF SUMMARY

### TECHNICAL PROBLEM

The inventors of the present invention have studied a technique for satisfying both the gas-barrier properties and the cold resistance while using epichlorohydrin rubber. The conventional epichlorohydrin rubber (Japanese Patent Application Publication No. 2003-226864, hereinafter called "Patent Document 4") still has room for improvement in achieving both the gas-barrier properties and the cold resistance. In addition, the epichlorohydrin rubber has tackiness and thus has another problem of markedly low roll processability.

An object of the present invention is to provide an epichlorohydrin rubber composition giving an excellent balance between gas-barrier properties and cold resistance and having satisfactory roll processability, a crosslinked epichlorohydrin rubber, a diaphragm for an accumulator, and a bladder for an accumulator.

Other objects of the present invention will become apparent from the following description.

### SOLUTION TO PROBLEM

The above objects are achieved by the following aspects. An aspect of the present invention is an epichlorohydrin rubber composition comprising 100 parts by weight of an epichlorohydrin-ethylene oxide-allyl glycidyl ether terpolymer rubber, 0 to 60 parts by weight of carbon black, and 30 to 60 parts by weight of a flat filler.

Another aspect is a crosslinked epichlorohydrin rubber prepared by crosslinking an epichlorohydrin rubber composition with a crosslinking agent that causes no dechlorination of an epichlorohydrin-ethylene oxide-allyl glycidyl ether terpolymer rubber during the crosslinking.

Still another aspect is a diaphragm for an accumulator comprising a crosslinked epichlorohydrin rubber.

Still another aspect is a bladder for an accumulator comprising a crosslinked epichlorohydrin rubber.

### ADVANTAGEOUS EFFECTS

According to the present invention, an epichlorohydrin rubber composition giving an excellent balance between gas-barrier properties and cold resistance and having satisfactory roll processability, a crosslinked epichlorohydrin rubber, a diaphragm for an accumulator, and a bladder for an accumulator can be provided.

### DETAILED DESCRIPTION

Embodiments for carrying out the present invention will now be described in detail.

### [Epichlorohydrin rubber composition]

An epichlorohydrin rubber composition in an embodiment comprises 100 parts by weight of an epichlorohydrin-ethylene oxide-allyl glycidyl ether terpolymer rubber (hereinafter also called "GECO"), 0 to 60 parts by weight of carbon black, and 30 to 60 parts by weight of a flat filler.

The GECO is a ring-opening polymer of a cyclic ether mainly containing epichlorohydrin and is a kind of epichlorohydrin rubber. The epichlorohydrin rubber has an ether linkage in the main chain and a chloromethyl group as a side chain and has excellent oil resistance, heat resistance, and ozone resistance. The GECO is a copolymer of epichlorohydrin, ethylene oxide, and allyl glycidyl ether and thus has, on a side chain, a double bond derived from the allyl glycidyl ether. The GECO therefore has such excellent characteristics that aging phenomena including thermal degradation and ozone cracking, which are considered as disadvantages of the conventional epichlorohydrin rubber, are suppressed, but the intrinsic properties including oil resistance, strength properties, and cold resistance are maintained.

The GECO may be a commercial product, and examples include "HYDRIN T3100", "HYDRIN T3105", and "HYDRIN T3106" manufactured by ZEON CORPORATION and "EPICHLOMER CG", "EPICHLOMER CG102", "EPICHLOMER CG105", and "EPICHLOMER DG" manufactured by Osaka Soda Co., Ltd.

The epichlorohydrin rubber composition in the embodiment comprises 0 to 60 parts by weight of carbon black relative to 100 parts by weight of the GECO. The carbon black is an optional component and may or may not be contained. When the carbon black is contained, the upper limit of the content is 60 parts by weight. In the description, the carbon black is carbon microparticles having a diameter of about 3 to 500 nm and, in the present embodiment, is added mainly as a filler.

When the carbon black is added, any grade of carbon black may be used, and examples include a fast extruding furnace (FEF) soft carbon. Examples of the commercial product thereof include "SEAST G-SO" manufactured by TOKAI CARBON CO., LTD.

The flat filler is a filler having a generally flat shape such as a thin plate shape and a disk shape. The flat filler preferably has an aspect ratio (flake diameter/flake thickness) of about 10 or more, more preferably 50 or more. The flat filler functions to sterically hinder gas permeation pathways in a rubber, thus improving the gas-barrier properties. The flat filler may be, for example, a magnesium silicate compound or an aluminum silicate (mica) compound. In the embodiment, the flat filler is preferably mica powder or sericite powder.

The flat filler preferably has a flat face with an average particle size of about 1.0 to 100 µm. The average particle size of flat faces is determined by laser diffractometry.

Such a flat filler may be a commercial product, and examples include "Sericite FSN" manufactured by Sanshin Mining Ind. Co., Ltd.

The epichlorohydrin rubber composition may comprise an acid acceptor. As described later, the epichlorohydrin rubber composition in the embodiment may be crosslinked by further adding a crosslinking agent to form a crosslinked epichlorohydrin rubber. To accelerate the reaction by the crosslinking agent added for the crosslinking, the epichlorohydrin rubber composition preferably contains an acid acceptor that is an acid scavenger. When comprising the acid acceptor, for example, the epichlorohydrin rubber composition may comprise 10 parts by weight or less of the acid acceptor relative to 100 parts by weight of the GECO.

The epichlorohydrin rubber composition may comprise a plasticizer. The plasticizer is added to improve the flowability of the epichlorohydrin rubber composition or to improve the cold resistance or the oil resistance of the crosslinked product of the epichlorohydrin rubber composition described later. When comprising the plasticizer, for example, the epichlorohydrin rubber composition may comprise 30 parts by weight or less of the plasticizer relative to 100 parts by weight of the GECO.

The epichlorohydrin rubber composition may comprise, in addition to the above components, other components as long as the advantageous effects of the invention are not impaired.

A crosslinked epichlorohydrin rubber prepared from the epichlorohydrin rubber composition in the embodiment obtains an excellent balance between gas-barrier properties and cold resistance. During production of a crosslinked epichlorohydrin rubber from the epichlorohydrin rubber composition of the embodiment, satisfactory roll processability is exerted as an effect.

### [Crosslinked epichlorohydrin rubber]

A crosslinked epichlorohydrin rubber as another embodiment will next be described. The crosslinked epichlorohydrin rubber is prepared by crosslinking the above epichlorohydrin rubber composition comprising 100 parts by weight of an epichlorohydrin-ethylene oxide-allyl glycidyl ether terpolymer rubber, 0 to 60 parts by weight of carbon black, and 30 to 60 parts by weight of a flat filler, with a crosslinking agent. The flat filler has a flat face with an average particle size of about 1.0 to 100 µm. The flat filler is preferably mica powder or sericite powder.

The crosslinking agent used for crosslinking the epichlorohydrin rubber composition is preferably a crosslinking agent causing no dechlorination of the GECO during the crosslinking. The GECO contains chlorine in the epichlorohydrin unit. For example, the polythiol crosslinking agent used in Patent Document 4 promotes crosslinking while the thiol group of the crosslinking agent reacts with chlorine of epichlorohydrin to cause dechlorination, forming crosslinkages. It has been revealed that when such a crosslinking agent involving dechlorination is used, not only the roll processability is inferior due to the tackiness and the like of an epichlorohydrin rubber composition mixture, but also a resulting crosslinked epichlorohydrin rubber has poor gas-barrier properties. In the embodiment, the "crosslinking agent causing no dechlorination of GECO during crosslinking" means a "crosslinking agent not eliminating chlorine in an epichlorohydrin rubber when an epichlorohydrin rubber composition is crosslinked".

It has also been revealed that when the crosslinking agent causing no dechlorination of GECO during crosslinking is used, not only the roll processability is further improved, but also the resulting crosslinked epichlorohydrin rubber has excellent gas-barrier properties. This seems to be because chlorine atoms still present in the GECO after crosslinking appropriately function to sterically hinder gas, and the crosslinked epichlorohydrin rubber obtains excellent gas-barrier properties.

The crosslinking agent causing no dechlorination of the GECO during the crosslinking is preferably sulfur or a peroxide crosslinking agent.

The amount of the crosslinking agent may be, for example, about 0.1 to 5 parts by weight relative to 100 parts by weight of the GECO.

### [Materials for accumulators]

The crosslinked epichlorohydrin rubber in the embodiment may be used for any purpose and is particularly preferably used as a rubber material (molding material) for accumulators.

It is preferred that the crosslinked epichlorohydrin rubber in the embodiment be used to constitute a bladder for an accumulator, a diaphragm for an accumulator, or a similar member.

A crosslinked epichlorohydrin rubber prepared by crosslinking an epichlorohydrin rubber composition comprising 100 parts by weight of an epichlorohydrin-ethylene oxide-allyl glycidyl ether terpolymer rubber, 0 to 60 parts by weight of carbon black, and 30 to 60 parts by weight of a flat filler, with a crosslinking agent not causing dechlorination of the epichlorohydrin-ethylene oxide-allyl glycidyl ether terpolymer rubber during the crosslinking may be used to produce, for example, a bladder for an accumulator or a diaphragm for an accumulator having an excellent balance between gas-barrier properties and cold resistance. The flat filler used here is preferably mica powder or sericite powder and preferably has a flat face with an average particle size of 1.0 to 100 µm. The crosslinking agent causing no dechlorination of the GECO during the crosslinking is preferably sulfur or a peroxide crosslinking agent. The epichlorohydrin rubber composition in the embodiment has excellent processability including roll processability and thus can improve the production efficiency of materials for accumulators.

### Examples

Examples of the present invention will next be described, but the present invention is not limited by these examples.

### 1. Epichlorohydrin rubber composition and crosslinked epichlorohydrin rubber

### (Example 1)

To 100 parts by weight of GECO, no carbon black was added, but 30 parts by weight of a flat filler ("Sericite FSN" manufactured by Sanshin Mining Ind. Co., Ltd, the flat face thereof has an average particle size of 5 µm) was added to prepare an epichlorohydrin rubber composition.

To the epichlorohydrin rubber composition, sulfur was added as a crosslinking agent to give a mixture (uncrosslinked). Sulfur is a crosslinking agent causing no dechlorination of GECO during crosslinking.

The mixture was kneaded with a roll kneader and then crosslinked to yield a crosslinked epichlorohydrin rubber.

### (Example 2)

The same procedure as in Example 1 was performed except that the amount of the flat filler in Example 1 was changed to 60 parts by weight, yielding a crosslinked epichlorohydrin rubber.

### (Example 3)

The same procedure as in Example 1 was performed except that 30 parts by weight of carbon black ("SEAST G-SO" manufactured by TOKAI CARBON CO., LTD.) was added to the epichlorohydrin rubber composition in Example 1, yielding a crosslinked epichlorohydrin rubber.

### (Example 4)

The same procedure as in Example 1 was performed except that 60 parts by weight of carbon black ("SEAST G-SO" manufactured by TOKAI CARBON CO., LTD.) was added to the epichlorohydrin rubber composition in Example 1, yielding a crosslinked epichlorohydrin rubber.

### (Example 5)

The same procedure as in Example 4 was performed except that the amount of the flat filler in Example 4 was changed to 60 parts by weight, yielding a crosslinked epichlorohydrin rubber.

### (Comparative Example 1)

The same procedure as in Example 1 was performed except that the amount of the flat filler in Example 1 was changed to 20 parts by weight, yielding a crosslinked epichlorohydrin rubber.

### (Comparative Example 2)

The same procedure as in Example 1 was performed except that the amount of the flat filler in Example 1 was changed to 80 parts by weight, yielding a crosslinked epichlorohydrin rubber.

### (Comparative Example 3)

The same procedure as in Example 4 was performed except that the amount of the flat filler in Example 4 was changed to 20 parts by weight, yielding a crosslinked epichlorohydrin rubber.

### (Comparative Example 4)

The same procedure as in Example 4 was performed except that the amount of the flat filler in Example 4 was changed to 80 parts by weight, yielding a crosslinked epichlorohydrin rubber.

### 2. Evaluation methods

Examples 1 to 5 and Comparative Examples 1 to 4 were evaluated by the following evaluation methods.

### (1) Roll processability

The processability when a mixture (uncrosslinked) was kneaded with a roll kneader was evaluated on the basis of the following criteria.

### [Criteria]

A: A mixture had no problem.
B: A mixture adhered to the roller.
C: A mixture was difficult to process.

### (2) Cold resistance (50% impact brittleness temperature)

The cold resistance of a resulting crosslinked rubber was evaluated as the 50% impact brittleness temperature determined in accordance with JIS K 6261 (1997) on the basis of the following criteria.

### [Criteria]

A: The 50% impact brittleness temperature was -40°C or lower.
B: The 50% impact brittleness temperature was -39°C to -36°C.
C: The 50% impact brittleness temperature was -35°C or higher.

### (3) Gas-barrier properties (gas-barrier properties at 25°C)

The nitrogen gas permeation amount of a test piece (φ44 cm × about 0.5 cm (in the measurement direction)) comprising a resulting crosslinked rubber was determined at 25°C using "GTR-30XAN0" manufactured by GTR Tec, then the gas permeation coefficient [cc·mm/m²·24hrs/atm] was calculated, and the gas-barrier properties were evaluated on the basis of the following criteria.

### [Criteria]

A: The gas permeation coefficient was 30 [cc·mm/m²·24hrs/atm] or less.
B: The gas permeation coefficient was 31 to 35 [cc·mm/m²·24hrs/atm].
C: The gas permeation coefficient was 36 [cc·mm/m²·24hrs/atm] or more.

The results are shown in Table 1.

**[Table 1]**

| | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|
| Rubber composition | Terpolymer: GECO | 100 | 100 | 100 | 100 | 100 | 100 | 100 | 100 | 100 |
| | Carbon black | - | - | 30 | 60 | 60 | - | - | 60 | 60 |
| | Flat filler | 30 | 60 | 30 | 30 | 60 | 20 | 80 | 20 | 80 |
| Evaluation | Roll processability | B | A | A | A | A | B | A | A | A |
| | Cold resistance (°C) | -42 | -38 | -41 | -37 | -36 | -43 | -34 | -39 | -32 |
| | Evaluation | A | B | A | B | B | A | C | B | C |
| | Gas-barrier properties (cc·mm/m²·24hrs·atm) | 35 | 22 | 25 | 32 | 20 | 39 | 15 | 39 | 12 |
| | Evaluation | B | B | A | B | A | C | A | C | A |
| | Comprehensive evaluation | B | B | A | B | A | C | C | C | C |

Table 1 reveals that Examples 1 to 5 have an excellent balance between gas-barrier properties and cold resistance and have satisfactory roll processability as compared with Comparative Examples 1 to 4.

In a separately performed examination, a polythiol crosslinking agent (triazine thiol, a crosslinking agent causing dechlorination of GECO during crosslinking) was used as the crosslinking agent for GECO in place of sulfur (a crosslinking agent causing no dechlorination of GECO during crosslinking). The resulting composition had poor roll processability due to adhesion of the mixture and was failed to be evaluated.

## Claims

1. An epichlorohydrin rubber composition comprising:
100 parts by weight of an epichlorohydrin-ethylene oxide-allyl glycidyl ether terpolymer rubber;
0 to 60 parts by weight of carbon black; and
30 to 60 parts by weight of a flat filler.

2. The epichlorohydrin rubber composition according to claim 1, wherein the flat filler is mica powder or sericite powder and has a flat face with an average particle size of about 1.0 to 100 µm.

3. A crosslinked epichlorohydrin rubber prepared by crosslinking an epichlorohydrin rubber composition comprising 100 parts by weight of an epichlorohydrin-ethylene oxide-allyl glycidyl ether terpolymer rubber, 0 to 60 parts by weight of carbon black, and 30 to 60 parts by weight of a flat filler, with a crosslinking agent causing no dechlorination of the epichlorohydrin-ethylene oxide-allyl glycidyl ether terpolymer rubber during the crosslinking.

4. The crosslinked epichlorohydrin rubber according to claim 3, wherein the flat filler is mica powder or sericite powder and has a flat face with an average particle size of 1.0 to 100 µm.

5. The crosslinked epichlorohydrin rubber according to claim 3 or 4, wherein the crosslinking agent is sulfur or a peroxide crosslinking agent.

6. A diaphragm for an accumulator, the diaphragm being prepared by crosslinking an epichlorohydrin rubber composition comprising 100 parts by weight of an epichlorohydrin-ethylene oxide-allyl glycidyl ether terpolymer rubber, 0 to 60 parts by weight of carbon black, and 30 to 60 parts by weight of a flat filler, with a crosslinking agent causing no dechlorination of the epichlorohydrin-ethylene oxide-allyl glycidyl ether terpolymer rubber during the crosslinking.

7. The diaphragm for an accumulator according to claim 6, wherein the flat filler is mica powder or sericite powder and has a flat face with an average particle size of 1.0 to 100 µm.

8. The diaphragm for an accumulator according to claim 6 or 7, wherein the crosslinking agent is sulfur or a peroxide crosslinking agent.

9. A bladder for an accumulator, the bladder being prepared by crosslinking an epichlorohydrin rubber composition comprising 100 parts by weight of an epichlorohydrin-ethylene oxide-allyl glycidyl ether terpolymer rubber, 0 to 60 parts by weight of carbon black, and 30 to 60 parts by weight of a flat filler, with a crosslinking agent causing no dechlorination of the epichlorohydrin-ethylene oxide-allyl glycidyl ether terpolymer rubber during the crosslinking.

10. The bladder for an accumulator according to claim 9, wherein the flat filler is mica powder or sericite powder and has a flat face with an average particle size of 1.0 to 100 µm.

11. The bladder for an accumulator according to claim 8 or 9, wherein the crosslinking agent is sulfur or a peroxide crosslinking agent.
